# FASCICULE DE BREVET EUROPEEN

(11) **EP 0 585 144 B1**
(45) Date de publication et mention de la délivrance du brevet: **27.09.1995**
(21) Numéro de dépôt: 93401420.0
(22) Date de dépôt: 03.06.1993
(51) Int. Cl.: B29C 43/36, B29C 70/32

(54) **Procédé et dispositif de moulage de pièce en matériau composite constituée de deux secteurs**
Formverfahren und Vorrichtung zur Herstellung von aus zwei Sektoren bestehenden Verbundwerkstoffteilen
Method and apparatus for moulding composite articles consisting of two sectors

(30) Priorité: 03.06.1992 FR 9206697
(43) Date de publication de la demande: 02.03.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Celerier, Eric Philippe Georges, F-92230 Gennevilliers (FR); Henrio, Philippe, F-91510 Lardy (FR)

(56) Documents cités:
- GB-A- 2 184 053
- US-A- 2 722 962

## Description

La présente invention concerne un procédé et un dispositif pour la réalisation de pièces de révolution en matériau composite à matrice organique. Elle est particulièrement appropriée à la réalisation par moulage d'une pièce de révolution de grand diamètre, constituée de deux secteurs séparables réunis par des nervures longitudinales dont ils sont munis, notamment un canal de flux froid de post-combustion d'une turbomachine aéronautique.

Actuellement, ce canal est réalisé en titane. On comprend aisément que le fait de réaliser ce canal en matériau composite est important sur le gain de masse de cette pièce. Mais la réalisation de cette pièce en matériau composite pose des problèmes, car, pour des raisons techniques d'accessibilité interne, le canal doit être réalisé en deux parties dont la valeur angulaire est de 240° environ pour la partie supérieure et de 120° environ pour la partie inférieure.

FR-A-2 490 993 décrit un procédé de réalisation d'un corps creux en matière stratifiée au moyen d'un moule, constitué d'au moins deux coquilles, dont la cavité correspond à la forme extérieure du corps creux, et d'une vessie expansible dont la forme extérieure correspond à la forme intérieure du corps creux. Le procédé consiste à recouvrir séparément chaque coquille du tissu préimprégné de résine ou que l'on imprègne de résine, à assembler les deux coquilles en interposant la vessie gonflée à l'intérieur, et à porter l'ensemble à température permettant ainsi la dilatation de la vessie et la compression du tissu imprégné sur la paroi du moule. L'application citée concerne la réalisation de tuyauteries de formes complexes, mais, bien que le procédé permette de réaliser des pièces de révolution, il ne permet pas de réaliser une pièce constituée de deux secteurs séparables.

Il serait évidemment possible de réaliser les deux secteurs dans des moules différents, mais, pour que les deux secteurs aient des caractéristiques identiques, il est impératif que les deux secteurs soient fabriqués simultanément.

Le but de la présente invention est de proposer un procédé et un outillage qui permettent de réaliser les deux secteurs constitutifs de la pièce en matériau composite à matrice organique en même temps pour que les deux secteurs aient des caractéristiques identiques.

Un autre but de la présente invention est de mettre au point une technique de réalisation de pièces de révolution de grand diamètre qui ne nécessitent pas des moyens industriels importants.

L'invention a également pour but de réduire sensiblement les masses des turbomachines et de réduire les coûts de fabrication, car les outillages ne sont pas détruits et peuvent être récupérés et utilisés dans des fabrications en série.

A ces fins, selon l'invention, le procédé de moulage de pièce de révolution en matériau composite à matrice organique, ladite pièce étant constituée de deux secteurs séparables réunis le long de nervures longitudinales dont ils sont munis, est caractérisé en ce que
a) on utilise un moule constitué de deux coquilles que l'on peut assembler entre elles, chaque coquille comportant, sur ses bords longitudinaux, des brides qui s'étendent radialement vers l'extérieur et qui définissent avec l'évidement de ladite coquille une empreinte ayant la forme extérieure désirée du secteur correspondant, ledit moule présentant, lorsque lesdites coquilles sont réunies, des rainures longitudinales entre les brides en correspondance desdites coquilles, lesdites rainures ayant une largeur supérieure au double de l'épaisseur des nervures des secteurs,
b) on drape simultanément et séparément les empreintes desdites coquilles de préimprégnés,
c) on recouvre de film plastique et de tissus de drainage les imprégnés ainsi drapés,
d) on assemble les deux coquilles en interposant des patins en silicone dans lesdites rainures entre les couches de préimprégnés recouvrant les parois intérieures des brides en correspondance desdites coquilles,
e) on introduit un sac à vide à l'intérieur du moule,
f) on place le moule dans un autoclave,
g) on effectue le vide de manière que le sac à vide comprime les préimprégnés sur la paroi interne du moule et lesdits patins dans lesdites rainures,
h) on porte le moule à la température nécessaire à la cuisson de la résine,
i) on diminue la température pour effectuer le débridage du moule et le démoulage des secteurs.

Le procédé permet une cuisson simultanée, sous la même poche, des deux secteurs de la pièce, d'où des conditions rigoureusement identiques de pression et de cuisson.

Pour la mise en oeuvre du procédé, on prévoit un dispositif comportant
un moule constitué de deux coquilles que l'on peut assembler entre elles, chaque coquille comportant, sur ses bords longitudinaux, des brides qui s'étendent radialement vers l'extérieur et qui définissent avec l'évidement de ladite coquille une empreinte ayant la forme extérieure désirée du secteur correspondant,
des moyens pour réunir lesdites coquilles, de telle manière que ledit moule présente entre les brides en correspondance desdites coquilles des rainures ayant une largeur supérieure au double de l'épaisseur des brides des secteurs,
des patins en silicone destinés à être interposés dans lesdites rainures,
un sac à vide s'adaptant à l'intérieur du moule, et
des moyens pour réaliser le vide dans le sac à vide.

D'autres caractéristiques et avantages de l'invention ressortiront à la lecture de la description suivante faite à titre d'exemple et en référence aux dessins annexés, dans lesquels :

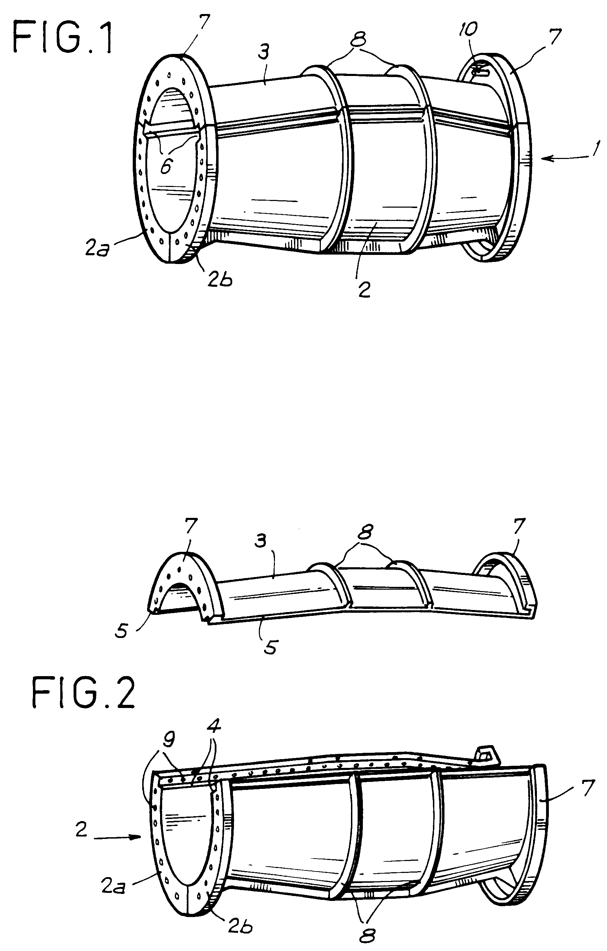

- la figure 1 montre le moule de l'invention tel qu'il sera présenté dans l'autoclave,
- la figure 2 montre le même moule dans lequel les coquilles sont écartées l'une de l'autre,
- la figure 3 représente une coupe selon un plan perpendiculaire à l'axe du moule, montrant en détail la liaison des deux coquilles selon un premier mode de réalisation,
- la figure 4 représente une coupe selon un plan perpendiculaire à l'axe du moule, montrant en détail la liaison des deux coquilles selon un deuxième mode de réalisation,
- la figure 5 est une coupe d'une extrémité frontale d'une coquille selon un plan passant par l'axe du moule, et
- la figure 6 est une vue en coupe, selon un plan perpendiculaire à l'axe du moule, d'une variante de réalisation du patin en silicone.

Les dessins montrent un dispositif de moulage destiné à réaliser une pièce de révolution de grand diamètre, en matériau composite à matrice organique, ladite pièce étant constituée de deux secteurs séparables réunis le long de nervures longitudinales dont sont munis lesdits secteurs, par des moyens de fixation.

Le dispositif comporte essentiellement un moule 1 constitué de deux coquilles 2 et 3. La coquille inférieure 2, représentée sur le dessin, a un secteur angulaire de 240° environ et la coquille supérieure 3 a un secteur angulaire de 120°. La coquille inférieure 2 est réalisée en deux parties 2a, 2b pour permettre le démoulage de la pièce. Les deux parties 2a et 2b sont reliées au niveau de leur plan de joint 3 par des moyens de fixation connus avec interposition d'un joint d'étanchéité non représenté sur les dessins.

Les deux coquilles 2 et 3 présentent au voisinage de leur plan de joint, c'est-à-dire le long de leurs bords longitudinaux, des brides 4, 5 qui s'étendent radialement vers l'extérieur, et qui sont espacées l'une de l'autre de manière à délimiter entre elles deux rainures longitudinales 6. Elles présentent également, à chacune de leurs extrémités frontales, une bride annulaire 7. Des brides circonférentielles supplémentaires 8 sont prévues pour rigidifier le moule 1.

Des conduits sont ménagés dans les parois des coquilles 2 et 3. Ces conduits débouchent dans les rainures 6 et sur les faces frontales des coquilles 2, 3 par des orifices 9. Une ou plusieurs buses de prises d'air 10 sont prévues sur les brides annulaires 7. Ces buses de prises d'air 10 sont reliées à une source a vide extérieure non représentée sur les dessins.

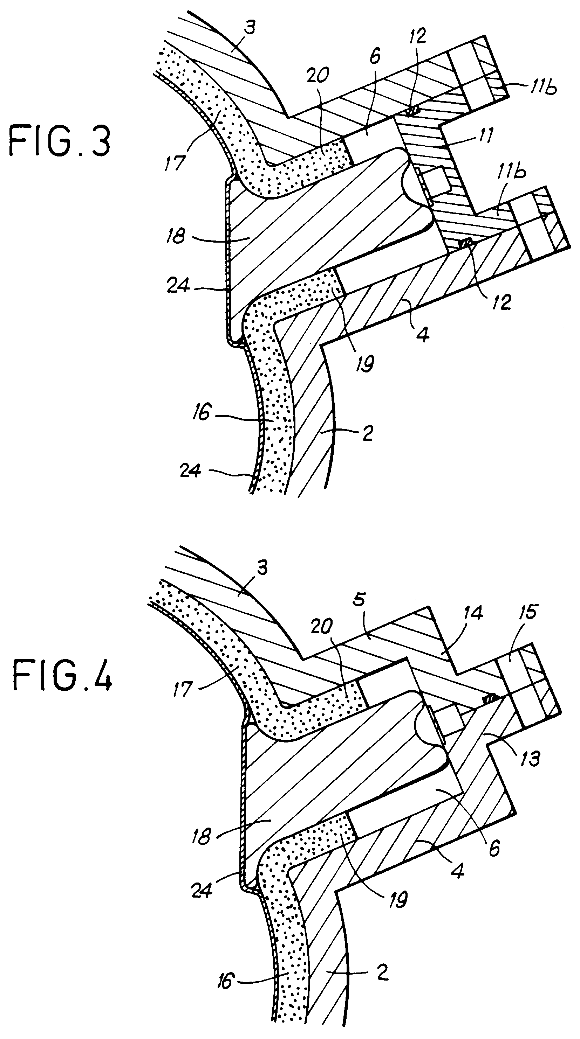

Selon un premier mode de réalisation, représenté sur la figure 3, les brides en correspondance 4 et 5 des deux coquilles 2 et 3 sont réunies entre elles par une pièce rapportée 11, ayant une section en U, dont les ailes 11a et 11b s'étendent vers l'extérieur. La pièce rapportée 11 est fixée sur les brides 4 et 5 par des moyens de fixation connus. Des joints d'étanchéité 12 sont interposés entre la pièce rapportée 11 et les brides 4, 5 pour assurer l'étanchéité au niveau du plan de joint des coquilles 2 et 3.

Selon un deuxième mode de réalisation, représentée sur la figure 4, les brides en correspondance 4 et 5 comportent sur leur bord extérieur des cornières 13, 14 présentant des alésages 15 pour leur fixation par vis-écrou. Un joint d'étanchéité 12 est prévu entre les cornières 13, 14.

Les joints 12 sont de préférence en silicone.

Sur les figures 3 et 4, on voit clairement les orifices 9 qui peuvent être avantageusement formés par des rainures longitudinales ménagées dans la pièce rapportée 11 ou les cornières 13, 14.

L'évidement de chaque coquille 2, 3 délimite avec les brides 4, 5 une empreinte ayant la forme extérieure désirée du secteur correspondant. De plus, la rainure 6 a une largeur supérieure au double de l'épaisseur des nervures longitudinales des secteurs à réaliser.

Pour réaliser les deux secteurs constituant la pièce de révolution à réaliser, les deux coquilles 2, 3 sont séparées et disposées de telle manière que leurs évidements respectifs soient situés sur le côté supérieur desdites coquilles.

On drape simultanément et séparément les empreintes des deux coquilles 2, 3 de préimprégnés qui, après compression et cuisson, donneront naissance aux deux secteurs 16, 17 de la pièce à réaliser. On recouvre ensuite de film plastique et de tissus de drainage les préimprégnés ainsi drapés.

On retourne enfin la coquilles 3 qui a la plus petite dimension, et on l'assemble à la coquille 2 en interposant des patins en silicone 18, dans les rainures 6, entre les couches de préimprégnés 19, 20 qui recouvrent les parois intérieures des brides 4 et 5 et qui deviendront les nervures longitudinales des secteurs 16, 17 après compression et cuisson.

Les patins en silicone 18 épousent les formes intérieures des secteurs 16, 17 au voisinage des rainures 6. La propriété du silicone est de gonfler lorsque la température s'élève, ce qui permet de mettre en compression le matériau composite, au niveau des rainures 6, pendant la cuisson, afin de le compacter. L'assemblage des parties du moule 1 se fait par des vis et des goupilles coniques de centrage.

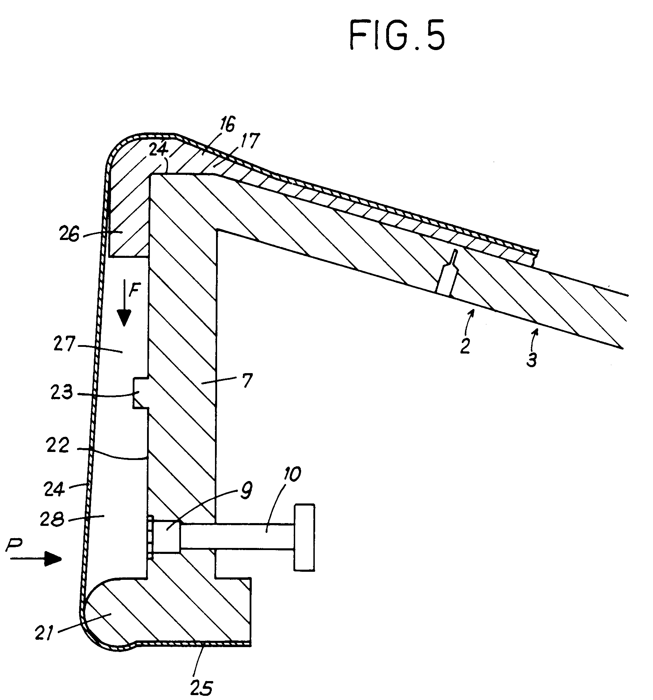

La figure 5 montre en coupe la bride annulaire 7 d'une coquille 2, 3. On y voit clairement l'orifice 9 communiquant avec la buse de prise d'air 10. Cet orifice 9 est avantageusement formé par une rainure circulaire ménagée dans la face frontale de la bride annulaire 7.

Le bord extérieur de la bride annulaire 7 présente sur la face frontale 22 du moule 1 un bourrelet 21. Un ressaut 23 ayant une épaisseur inférieure à l'épaisseur du bourrelet 21 est prévu sur la face frontale 22 du moule 1 entre le bourrelet 21 et la paroi intérieure 24 des coquilles 2, 3.

Après avoir réuni les deux coquilles 2 et 3, on dispose un sac à vide 24 à l'intérieur du moule 1. Ce sac à vide 24 est constitué d'un manchon de révolution dont les extrémités ouvertes 25 sont fixées de manière étanche autour des brides annulaires 7, comme on le voit clairement sur la figure 5. Le sac à vide s'applique contre les tissus de drainage et les patins en silicone 18. On place le moule 1 dans un autoclave. On effectue le vide dans l'espace délimité par les coquilles 2, 3 et le sac à vide 24, de telle manière que le sac à vide 24 comprime, à la cuisson, les préimprégnés sur la paroi intérieure du moule 1, et les patins 18 dans les rainures 6. On porte ensuite le moule 1 à une température de cuisson du préimprégné qui est de 315°C environ, enfin, on descend la température à 180°C pour effectuer le débridage du moule 1 puis le démoulage des secteurs 16 et 17.

La résine du préimprégné fige à 250°C environ, c'est-à-dire que l'on obtient les cotes finales de la pièce à réaliser à cette température. Les cotes de l'outillage sont donc calculée pour être à la géométrie de la pièce à 250°C en tenant compte de la dilatation thermique du moule 1.

Naturellement, l'intérieur du moule 1 peut contenir des évidements de manière à réaliser des bossages sur l'extérieur des secteurs 16, 17 de la pièce.

Comme on le voit sur la figure 5, la pièce à réaliser comporte des brides frontales 26. Le bourrelet 21 est utile pour la réalisation de la bride frontale 26. En effet, lors de la mise en pression isostatique, pour éviter que le matériau composite ne plisse au niveau de l'arrondi de la bride 26, il est nécessaire de tirer sur le composite comme l'indique la flèche F. La présence du bourrelet 21, recouvert de la poche à vide 24, remplit cette fonction. La pression P exercée sur la poche à vide 24 dans l'autoclave tend la poche à vide 24 et celle-ci a tendance à tirer sur le matériau en composite dans le sens de la flèche F. Un dégagement est prévu sur la face frontale 22 entre le bourrelet 21 et la bride frontale 26. Ce dégagement est séparé en deux parties 27 et 28 par le ressaut 23. La partie 27 sert de réceptacle aux résidus, solvant, résine..., qui s'écoulent lors de la mise en pression. La partie 28 est un réceptable de sécurité dans le cas où une partie des résidus franchirait le ressaut 23. Ces réceptables 27, 28 sont nécessaires pour empêcher l'obstruction des voies de vide 9, 10 par les résidus.

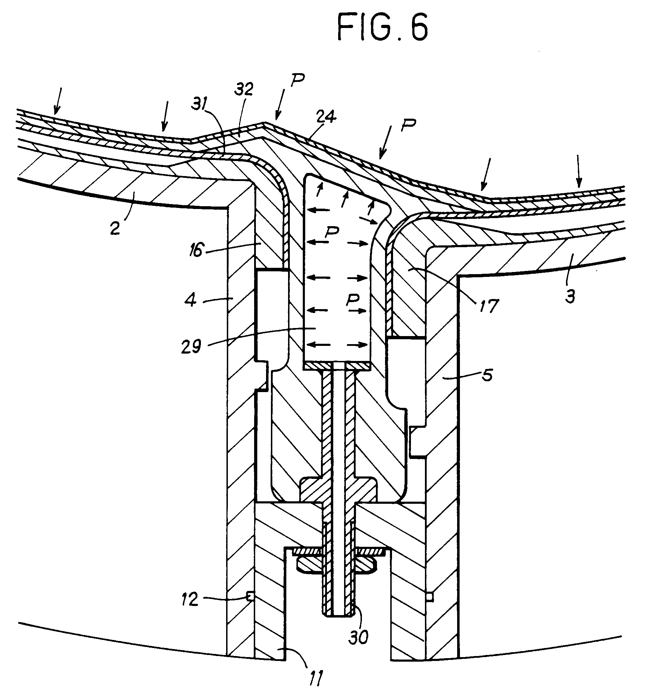

La figure 6 montre une variante de réalisation dans laquelle le patin de silicone 18 est creux, sa cavité interne 29 étant reliée à l'extérieur du moule 1 par une buse 30. Dans cette variante, le compactage du stratifié dans la rainure 1 n'est plus assuré par la dilatation du patin 18 et l'appui procuré par la pression P sur la face intérieure du patin 8, mais par le gonflement du patin 18 suite à la pression P régnant dans la cavité 29. Cette variante présente de plus l'avantage d'une plus grande facilité de positionnement du patin 18 puisqu'il peut être fixé de façon rigide au moule 1 par l'intermédiaire de la buse 30 et de la pièce rapportée 11. Elle permet également une plus grande capacité de compactage du fait de la pression P qui est importante. Sur cette figure 6, on voit clairement la disposition du film plastique 31 et des tissus de drainage 32.

## Revendications

1. Procédé de moulage de pièce de révolution en matériau composite à matrice organique, ladite pièce étant constituée de deux secteurs séparables (16, 17) réunis le long de nervures (19, 20) longitudinales, dont ils sont munis, caractérisé en ce que
a) on utilise un moule (1) constitué de deux coquilles (2, 3) que l'on peut assembler entre elles, chaque coquille (2, 3) comportant, sur ses bords longitudinaux, des brides (4, 5) qui s'étendent radialement vers l'extérieur et qui définissent, avec l'évidement de ladite coquille, une empreinte ayant la forme extérieure désirée du secteur correspondant (16, 17), ledit moule (1) présentant, lorsque lesdites coquilles (2, 3) sont réunies, des rainures (6) longitudinales entre les brides (4, 5) en correspondance desdites coquilles (2, 3), lesdites rainures (6) ayant une largeur supérieure au double de l'épaisseur des nervures (19, 20) des secteurs (16, 17),
b) on drape simultanément et séparément les empreintes desdites coquilles (2, 3) de préimprégnés,
c) on recouvre de film plastique et de tissus de drainage les préimprégnés ainsi drapés,
d) on assemble les deux coquilles (2, 3) en interposant des patins en silicone (18) dans lesdites rainures entre les couches (19, 20) de préimprégnés recouvrant les parois intérieures des brides (4, 5) en correspondance desdites coquilles (2, 3),
e) on introduit un sac à vide (24) à l'intérieur du moule (1),
f) on place le moule (1) dans un autoclave,
g) on effectue le vide de manière que le sac à vide (24) comprime les préimprégnés sur la paroi intérieure du moule (1) et lesdits patins (18) dans lesdites rainures (6),
h) on porte le moule (1) à la température nécessaire à la cuisson de la résine,
i) on descend la température pour effectuer le débridage du moule (1) et le démoulage des secteurs (16, 17).

2. Dispositif pour la mise en oeuvre du procédé selon la revendication 1, caractérisé en ce qu'il comporte :
un moule (1) constitué de deux coquilles (2, 3) que l'on peut assembler entre elles, chaque coquille (2, 3) comportant sur ses bords longitudinaux des brides (4, 5) qui s'étendent radialement vers l'extérieur et qui définissent avec l'évidement de ladite coquille (2, 3) une empreinte ayant la forme extérieure désirée du secteur correspondant (16, 17),
des moyens pour réunir lesdites coquilles (2, 3), de telle manière que ledit moule (1) présente entre les brides (4, 5) en correspondance desdites coquilles (2, 3) des rainures (6) ayant une largeur supérieure au double de l'épaisseur des brides (19, 20) des secteurs (16, 17),
des patins en silicone (18) destinés à être interposés dans lesdites rainures (6),
un sac à vide (24) s'adaptant à l'intérieur du moule, et
des moyens pour réaliser le vide dans le sac à vide (24).

3. Dispositif selon la revendication 2, caractérisé en ce que les moyens pour réaliser le vide dans le sac à vide (24) comportent des conduits (9) ménagés dans lesdites coquilles et débouchant, d'une part, sur les faces frontales des coquilles et, d'autre part, dans les rainures (6).

4. Dispositif selon l'une des revendication 2 ou 3, caractérisé en ce que les moyens pour réunir lesdites coquilles (2, 3) comportent une pièce rapportée (11) interposée entre les brides (4, 5) et fixée à celles-ci par des moyens de fixation.

5. Dispositif selon l'une des revendications 2 ou 3, caractérisé en ce que les moyens pour réunir lesdites coquilles (2, 3) sont formés par des cornières (13, 14) fixées sur le bord extérieur desdites brides (4, 5) et réunies par des moyens de fixation.

6. Dispositif selon la revendication 2, caractérisé en ce que les patins en silicone (18) épousent les formes intérieures des secteurs (16, 17) au voisinage des rainures (6).

7. Dispositif selon la revendication 6, caractérisé en ce que les patins en silicone (18) sont creux, leur cavité (29) interne étant reliée à l'extérieur du moule (1) par une buse (30).

8. Dispositif selon la revendication 7, caractérisé en ce que les patins en silicone (18) sont fixés au moule (1).

9. Dispositif selon l'une des revendications 2 à 8, caractérisé en ce que l'une des coquilles (3) permet de conformer un secteur (17) de 120° environ, l'autre coquille (2) permet de conformer un secteur (16) de 240° environ et est réalisée en deux parties (2a, 2b) pour permettre le démoulage de ce secteur (16) de 240°.

10. Dispositif selon l'une quelconque des revendications 2 à 9, caractérisé en ce que le moule (1) présente sur ses faces frontales des brides annulaires (7) munies d'un bourrelet (21) et en ce que le sac à vide (24) comporte des extrémités ouvertes (25) fixées de manière étanche autour des brides annulaires (7).

## Claims

1. Method for moulding an axisymmetric part made of composite material with an organic matrix, the said part consisting of two separable sectors (16, 17) joined along longitudinal ribs (19, 20) with which they are provided, characterized in that
a) use is made of a mould (1) consisting of two mould parts (2, 3) which can be assembled together, each mould part (2, 3) comprising, on its longitudinal edges, flanges (4, 5) which extend radially outwards and which define, with the recess in the said mould part, an impression having the desired external shape of the corresponding sector (16, 17), the said mould (1) having, when the said mould parts (2, 3) are joined, longitudinal grooves (6) between the flanges (4, 5) in correspondence with the said mould parts (2, 3), the said grooves (6) having a width greater than twice the thickness of the ribs (19, 20) of the sectors (16, 17),
b) preimpregnated materials are simultaneously and separately applied to the impressions of the said mould parts (2, 3),
c) the preimpregnated materials thus applied are covered with plastic film and with drainage fabrics,
d) the two mould parts (2, 3) are assembled while interposing silicone blocks (18) in the said grooves between the layers (19, 20) of preimpregnated materials covering the internal walls of the flanges (4, 5) in correspondence with the said mould parts (2, 3),
e) a vacuum bag (24) is introduced into the mould (1),
f) the mould (1) is placed in an autoclave,
g) evacuation is carried out so that the vacuum bag (24) compresses the preimpregnated materials against the internal wall of the mould (1) and the said blocks (18) in the said grooves (16),
h) the mould (1) is heated to the temperature required for curing the resin,
i) the temperature is lowered in order to unclamp the mould (1) and release the sectors (16, 17).

2. Device for implementing the method according to Claim 1, characterized in that it comprises:
a mould (1) consisting of two mould parts (2, 3) which can be assembled together, each mould part (2, 3) comprising, on its longitudinal edges, flanges (4, 5) which extend radially outwards and which define, with the recess in the said mould part (2, 3), an impression having the desired external shape of the corresponding sector (16, 17),
means for joining the said mould parts (2, 3), so that the said mould (1) has, between the flanges (4, 5) in correspondence with the said mould parts (2, 3), grooves (6) having a width greater than twice the thickness of the flanges (19, 20) of the sectors (16, 17),
silicone blocks (18) intended to be interposed in the said grooves (6),
a vacuum bag (24) which fits inside the mould, and
means for evacuating the vacuum bag (24).

3. Device according to Claim 2, characterized in that the means for evacuating the vacuum bag (24) comprise ducts (9) made in the said mould parts and emerging, on the one hand, on the front faces of the mould parts and, on the other hand, in the grooves (6).

4. Device according to one of Claims 2 and 3, characterized in that the means for joining the said mould parts (2, 3) comprise an attached part (11) interposed between the flanges (4, 5) and fixed thereto by fastening means.

5. Device according to one of Claims 2 and 3, characterized in that the means for joining the said mould parts (2, 3) are formed by corner brackets (13, 14) fixed on the outer edge of the said flanges (4, 5) and joined by fastening means.

6. Device according to Claim 2, characterized in that the silicone blocks (18) match the internal shapes of the sectors (16, 17) in the vicinity of the grooves (6).

7. Device according to Claim 6, characterized in that the silicone blocks (18) are hollow, their internal cavity (29) being connected to the outside of the mould (1) by a nozzle (30).

8. Device according to Claim 7, characterized in that the silicone blocks (18) are fixed to the mould (1).

9. Device according to one of Claims 2 to 8, characterized in that one of the mould parts (3) makes it possible to shape a sector (17) of approximately 120°, and the other mould part (2) makes it possible to shape a sector (16) of approximately 240° and is made in two parts (2a, 2b) in order to allow release of this 240° sector (16).

10. Device according to one of Claims 2 to 9, characterized in that the mould (1) has, on its front faces, annular flanges (1) provided with a lip (21) and in that the vacuum bag (24) comprises open ends (25) fixed in a leaktight manner around the annular flanges (7).

## Patentansprüche

1. Verfahren zur Herstellung eines Rotationsteiles aus einem Verbundwerkstoff aus organischen Matrizen, wobei das Teil aus Zwei trennbaren Sektoren (16,17) besteht, die Längsrippen (19,20) aufweisen, mit denen sie in Längsrichtung zusammengefügt sind, **gekennzeichnet** durch
a) Verwendung einer aus Zwei miteinander verbindbaren Schalen (2,3) bestehenden Gießform (1), wobei jede Schale (2,3) an ihren Längskanten Flansche (4,5) umfaßt, die sich radial nach außen erstrecken und die zusammen mit der Aushöhlung der Schalen eine Abdrucksform mit der gewünschten äußeren Form des entsprechenden Sektors (16,17) bilden, wobei die Gießform (1), dann, wenn die Schalen (2,3) zusammengefügt sind, Zwischen den Flanschen (4,5) an der Verbindung der Schalen (2,3) Längsnuten (6) aufweist, wobei die Breite der Nuten größer ist als die doppelte Breite der Rippen (19,20) der Sektoren (16,17),
b) gleichzeitiges und getrenntes Überziehen der Abdrucksformen der Schalen (2,3) mit einer Imprägnierung,
c) Bedecken der Imprägnierung mit einem Kunstharzfilm und mit Stoffen zur Trocknung,
d) Zusammenfügen der beiden Schalen (2,3) unter Einfügen von Silikonkeilen (18) in die Nuten Zwischen die Imprägnierungsschichten (19,20), die die Innenwände der Flansche (4,5) an der Verbindung der Schalen (2,3) bedecken,
e) Einführen eines Unterdrucksackes (24) in das Innere der Gießform (1),
f) Einbringen der Gießform (1) in einen Autoklav,
g) Herstellen eines Vakuums dergestalt, daß der Unterdrucksack (24) die Imprägnierung gegen die Innenwand der Gießform (1) und die Keile (18) in die Nuten (6) drückt,
h) Erhitzen der Gießform (1) auf die notwendige Härtetemperatur des Kunstharzes,
i) Senken der Temperatur zum Auseinanderbauen der Gießform (1) und zum Lösen der Sektoren (16,17).

2. Vorrichtung zur Durchführung des Verfahrens gemäß Anspruch 1,
**gekennzeichnet** durch
eine aus zwei miteinander verbindbaren Schalen (2,3) bestehende Gießform (1), wobei jede Schale (2,3) an ihren Längskanten Flansche (4,5) umfaßt, die sich radial nach außen erstrecken und die mit der Aushöhlung der Schalen (2,3) eine Abdrucksform mit der gewünschten äußeren Form des entsprechenden Sektors (16,17) bilden, Einrichtungen zum Zusammenfügen der Schalen (2,3) auf eine Art und Weise, daß die Gießform (1) Zwischen den Flanschen (4,5) an der Verbindung der Schalen (2,3) Nuten (6) aufweist, deren Breite größer ist als die doppelte Breite der Rippen (19,20) der Sektoren (16,17),
zum Einfügen in die Nuten (6) geeignete Silikonkeile (18),
einen sich an das Innere der Gießform anpassenden Vakuumsack (24), und Einrichtungen zum Herstellen eines Vakuums in dem Vakuumsack (24).

3. Vorrichtung gemäß Anspruch 2,
dadurch **gekennzeichnet**,
daß die Einrichtungen zum Herstellen des Vakuums im Vakuumsack (24) Kanäle aufweisen, die in der Schale ausgespart sind und einerseits in die Stirnseiten der Schalen und andererseits in die Nuten (6) einmünden.

4. Vorrichtung gemäß einem der Ansprüche 2 oder 3,
dadurch **gekennzeichnet**,
daß die Einrichtungen zum Zusammenfügen der Schalen (2,3) ein Ansatz-Stück (11) umfassen, das zwischen die Flansche (4,5) eingefügt ist und an ihnen durch Befestigungseinrichtungen befestigt ist.

5. Vorrichtung gemäß einem der Ansprüche 2 oder 3,
dadurch **gekennzeichnet**,
daß die Einrichtungen zum Zusammenfügen der Schalen (2,3) durch Winkelstücke (13,14) gebildet sind, die an der äußeren Kante der Flansche (4,5) angebracht und durch Befestigungseinrichtungen zusammengefügt sind.

6. Vorrichtung gemäß Anspruch 2,
dadurch **gekennzeichnet**,
daß die Silikonkeile (18) in der Nähe der Nuten (6) an den Innenseiten der Sektoren (16,17) anliegen.

7. Vorrichtung gemäß Anspruch 6,
dadurch **gekennzeichnet**,
daß die Silikonkeile (18) hohl sind, wobei ihrer innerer Hohlraum (29) mit dem Außenraum der Gießform (1) über ein Rohr (30) verbunden ist.

8. Vorrichtung emäß Anspruch 7,
dadurch **gekennzeichnet**,
daß die Silikonkeile (18) an der Gießform (1) befestigt sind.

9. Vorrichtung gemäß einem der Ansprüche 2 bis 8,
dadurch **gekennzeichnet**,
daß eine der Schalen (3) die Herstellung eines Sektors (17) von etwa 120° erlaubt, und die andere Schale (2) die Herstellung eines Sektors (16) von etwa 240° erlaubt und in zwei Teilen (2a,2b) ausgeführt ist, damit der Sektor (16) von 240° auseinandergenommen werden kann.

10. Vorrichtung gemäß einem der Ansprüche 2 bis 9,
dadurch **gekennzeichnet**,
daß die Gießform (1) an ihren Stirnseiten ringförmige Flansche (7) aufweist, die mit einem Wulst (21) ausgestattet sind, und daß der Vakuumsack (24) offene Enden (25) aufweist, die abdichtend an den ringförmigen Flanschen (7) befestigt sind.
